(19) Europäisches Patentamt / European Patent Office / Office européen des brevets

(11) **EP 4 429 314 A1**

(12) **EUROPEAN PATENT APPLICATION**
published in accordance with Art. 153(4) EPC

(43) Date of publication:
**11.09.2024 Bulletin 2024/37**

(21) Application number: **22888933.3**

(22) Date of filing: **11.08.2022**

(51) International Patent Classification (IPC):
**H04W 24/04** (2009.01)

(52) Cooperative Patent Classification (CPC):
**H04W 24/02; H04W 24/04; H04W 72/0453;**
Y02D 30/70

(86) International application number:
**PCT/CN2022/111793**

(87) International publication number:
**WO 2023/077898 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 CN 202111309111**

(71) Applicant: ZTE Corporation
**Shenzhen, Guangdong 518057 (CN)**

(72) Inventors:
• LIU, Wenfeng
  Shenzhen, Guangdong 518057 (CN)
• DAI, Bo
  Shenzhen, Guangdong 518057 (CN)
• HU, Youjun
  Shenzhen, Guangdong 518057 (CN)
• LIU, Kun
  Shenzhen, Guangdong 518057 (CN)

(74) Representative: **Gevers Patents**
**De Kleetlaan 7A**
**1831 Diegem (BE)**

(54) **RESOURCE DETERMINING METHOD, APPARATUS, DEVICE, MEDIUM, AND PRODUCT**

(57) Embodiments of the present application provide a resource determining method, an apparatus, a device, a medium, and a product. A PUCCH resource of a RedCap terminal is determined by means of initial BWP position information of the RedCap terminal and the starting PRB position of PUCCH transmission. According to the embodiments of the present application, for the difference between initial uplink BWP relative positions of a RedCap terminal and a conventional terminal, a method for determining a PUCCH resource of the RedCap terminal without frequency hopping is further specifically provided, separately.

FIG. 2

## Description

This application is filed based on the Chinese patent application with application No. 202111309111.7, filed on November 5, 2021, and claims a priority of the Chinese patent application; and the entire content of the Chinese patent application is incorporated into this application by reference.

## TECHNICAL FIELD

Embodiments of the present disclosure relate to the technical field of communication, and in particular, to a resource determining method, an apparatus, a device, a medium and a product.

## BACKGROUND

With the rapid development of wireless communication network technology, a fifth generation (5th generation, 5G) new radio (NR) technology has gradually matured. In order to accelerate the popularization of 5G to enable 5G to be applied to more scenarios, NR reduced capability (RedCap) technology has emerged.

NR RedCap is suitable for internet of things scenarios of terminals, such as industrial wireless sensors, video surveillance and wearable devices. A RedCap device has characteristics of reduced complexity and cost, reduced size, lower energy consumption, etc. Currently, since a starting position of a physical uplink control channel (PUCCH) of a RedCap device is difficult to be determined, resource fragmentation of a physical uplink shared channel (PUSCH) may occur, thereby resulting in resource waste. How to optimize a resource is an urgent problem to be discussed and solved.

## SUMMARY

The embodiments of the present disclosure provide a resource determining method, an apparatus, a device, a computer-readable storage medium, and a computer program product, which aim at enhancing the usage efficiency of a network resource.

In a first aspect, the embodiments of the present disclosure provide a resource determining method, where the resource determining method includes: receiving, by a first terminal, frequency hopping indication information and physical uplink control channel (PUCCH) configuration information, where the frequency hopping indication information is used to be indicative of disabling PUCCH frequency hopping for the first terminal; obtaining a starting position of a PUCCH according to bandwidth part (BWP) information for the first terminal and the PUCCH configuration information; and determining a PUCCH resource for the first terminal according to the starting position of the PUCCH.

In a second aspect, the embodiments of the present disclosure provide a resource determining method, where the resource determining method includes: sending frequency hopping indication information and physical uplink control channel (PUCCH) configuration information, where the frequency hopping indication information is used to be indicative of disabling PUCCH frequency hopping for a first terminal; receiving bandwidth part (BWP) information for the first terminal and bandwidth part (BWP) information for a second terminal; obtaining signaling indication according to the bandwidth part (BWP) information for the first terminal, the bandwidth part (BWP) information for the second terminal and a network configuration resource; determining a starting position of a PUCCH according to the signaling indication; and determining a PUCCH resource for the first terminal according to the starting position of the PUCCH.

In a third aspect, the embodiments of the present disclosure provide a reduced capability (RedCap) apparatus, where the RedCap apparatus includes: a receiving module, configured to receive frequency hopping indication information and physical uplink control channel (PUCCH) configuration information, where the frequency hopping indication information is used to be indicative of disabling PUCCH frequency hopping for a first terminal; an analysis module, configured to obtain a starting position of a PUCCH according to bandwidth part (BWP) information for the first terminal and the PUCCH configuration information; and a configuration module, configured to determine a PUCCH resource for the first terminal according to the starting position of the PUCCH.

In a fourth aspect, the embodiments of the present disclosure provide an electronic device, where the electronic device includes: a memory, a processor and a computer program stored on the memory and executable on the processor; the processor, upon executing the computer program implements any one of the methods according to the first aspect and the second aspect.

In a fifth aspect, the embodiments of the present disclosure provide a computer-readable storage medium, including that: the computer-readable storage medium stores computer-executable instructions, and the computer-executable instructions are used to execute the resource determining method according to the first aspect or the second aspect.

In a sixth aspect, the embodiments of the present disclosure provide a computer program product, including: a computer program or computer instructions, where the computer program or the computer instructions are stored in a computer-readable storage medium, a processor of a computer device reads the computer program or the computer instructions from the computer-readable storage medium, and the computer program or the computer instructions are executed by the processor, so as to enable the computer device execute the resource determining method according to the first aspect or the second aspect.

BRIEF DESCRIPTION OF THE DRAWINGS

FIG. 1 is a schematic diagram of a common PUCCH resource for a conventional terminal.

FIG. 2 is a schematic diagram of a system architecture provided by an embodiment of the present disclosure.

FIG. 3 is a schematic diagram of a resource determining method in a first situation in an embodiment of the present disclosure.

FIG. 4 is a schematic diagram of a resource determining method in a second situation provided by an embodiment of the present disclosure.

FIG. 5 is a schematic diagram of a resource determining method in a third situation provided by an embodiment of the present disclosure.

FIG. 6 is a schematic diagram of a resource determining method in a fourth situation provided by an embodiment of the present disclosure.

FIG. 7 is a schematic diagram of a resource determining method in another situation provided by an embodiment of the present disclosure.

FIG. 8 is a schematic structural diagram of a RedCap apparatus provided by an embodiment of the present disclosure.

FIG. 9 is a schematic structural diagram of an electronic device provided by an embodiment of the present disclosure.

FIG. 10 is a schematic structural diagram of an electronic device provided by an embodiment of the present disclosure.

DETAILED DESCRIPTION

In order to make the objectives, technical solutions and advantages of the present disclosure more clear, the present disclosure will be further described in detail below with reference to the drawings and embodiments. It should be understood that specific embodiments described herein are used to only explain the present disclosure and are not used to limit the present disclosure.

It should be noted that although functional module division is shown in the schematic diagram of the apparatus and a logical order is shown in the flowchart, in some cases, the steps shown or described may be performed differently from the module division in the apparatus or the order in the flowchart. The terms "first", "second", etc. in the specification, claims, and the above drawings are used to distinguish similar objects, and do not need to be used to describe a specific order or sequence.

In the description of the embodiments of the present disclosure, unless otherwise expressed specified, the words "setting", "installation", "connection", etc. should be understood in a broad sense. Those skilled in the art can, in combination the specific content of the technical solutions, reasonably determine the specific meanings of the above words in the embodiments of the present disclosure. In the embodiments of the present disclosure, the words such as "further", "exemplarily", or "optionally" are used as cases, instances, or explanations and should not be interpreted as being more preferred or advantageous than other embodiments or design solutions. The usage of words such as "further", "exemplarily", or "optionally", is intended to present relevant concepts in a specific way.

The embodiments of the present disclosure may be applied to various communication systems, for example, global system of mobile communication (GSM) system, code division multiple access (CDMA) system, wideband code division multiple access (WCDMA) system, general packet radio service (GPRS), long term evolution (LTE) system, advanced long term evolution (LTE-A) system, universal mobile telecommunication system (UMTS), 5G system, beyond fifth generation (B5G) system, and sixth generation (6G) system, which are not limited in the embodiments of the present disclosure.

A base station in the embodiments of the present disclosure may be a device capable of communicating with a user terminal. The base station may be any device with a wireless transceiving function, and includes but is not limited to: a base station (NodeB), an evolved base station (eNodeB), a base station in a 5G communication system, a base station in a future communication system, an access node in a WiFi (wireless fidelity) system, a wireless relay node and a wireless backhaul node, etc. The base station may alternatively be a wireless controller in a cloud radio access network (CRAN) scenario; and the base station may alternatively be a small station, a transmission reference point (TRP), etc., which is not limited in the embodiments of the present disclosure.

A terminal device in the embodiments of the present disclosure may be any device capable of supporting NR RedCap standard, which is not limited in the embodiments of the present disclosure.

With the development of 5G communication, 5G standards are also constantly evolving. The existing standards of 5G mainly define three major application scenarios, including: enhanced mobile broadband (eMBB) for high-performance communication scenarios, ultra-reliable low-latency communications (URLLC) with extremely high safety requirements for autonomous driving, etc., and low power wide area (LPWA) network for ultra-large communication coverage areas and mainly targeting low-cost applications such as the Internet of Things. However, with the growing demands for new applications, the existing three major scenarios are no longer able to support more diverse network scenario demands. 5G terminal chips and modules have complex designs, high research and development thresholds, and high investment costs, thereby resulting in high cost of 5G terminals. Moreover, in many practical application scenarios, there are no high requirements for indicators such as rate. Existing 5G capabilities exceed current needs of many scenarios. Therefore, the standardization organization launches a more detailed new 5G standard, i.e., reduced capability (RedCap), for application scenarios in which a certain demand for a communication bandwidth and a need of cost are required. Redcap mainly targets an application scenario with a moderate requirement for bandwidth, power consumption, cost, etc.

A main difference between a 5G RedCap terminal and a 5G conventional terminal is that a spectrum bandwidth part (BWP) of the RedCap is smaller than that of the 5G conventional terminal. Compared with a bandwidth frequency range (FR) of the 5G conventional terminal, a bandwidth of the RedCap is smaller than that of the 5G conventional. Compared with 4G, a data rate of the RedCap has been significantly enhanced, and compared with a 5G conventional device, a RedCap device has a lower cost.

At present, a position of a starting physical resource block (PRB) of a PUCCH resource for a RedCap terminal is not clear. Moreover, if a first hop of a PUCCH for a 5G conventional terminal is used as a starting PRB position of the PUCCH resource for the RedCap terminal, resource fragmentation problem on the physical uplink shared channel (PUSCH) would be inevitably caused, and thus, a resource utilization rate is significantly reduced.

In order to elaborate the technical solution, the PUCCH resource for the conventional terminal are further explained and described below.

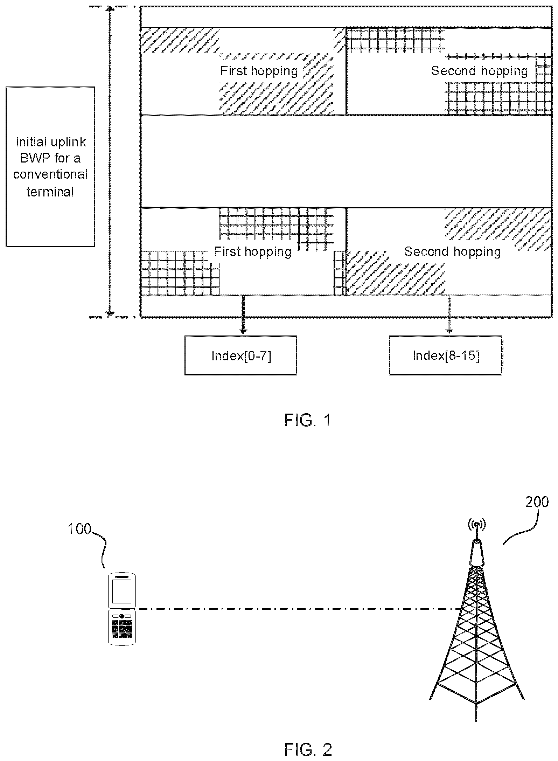

FIG. 1 is a schematic diagram of a common PUCCH resource for a conventional terminal. As shown in FIG. 1, during an initial access phase of the conventional terminal, a common PUCCH resource set is determined according to a resource configuration index of a physical uplink control channel (PUCCH) notified by a system information block 1 (SIB1), and then, a PUCCH resource is determined in the common PUCCH resource set by combining a downlink control channel (DCI) and a control channel element (CCE). Moreover, in a licensed spectrum, a user uses frequency hopping by default to transmit the PUCCH, so as to obtain a frequency domain diversity gain. A frequency hopping rule is described as: when a PUCCH resource index indicated by DCI/CCE is taken as 0-7, a first hop of the PUCCH is located at a lower edge of a configured initial uplink BWP, and a second hop of the PUCCH is located at an upper edge of the configured initial uplink BWP; and when a PUCCH resource index indicated by DCI/CCE is taken as 8-15, a first hop of the PUCCH is located at an upper edge of the configured initial uplink BWP, and a second hop of the PUCCH is located at a lower edge of the configured initial uplink BWP.

If the above method is used by the RedCap terminal to determine a position of a PUCCH, since BWP of the RedCap terminal is smaller than that of the conventional terminal, there may be a case where the initial uplink BWP configured for the conventional terminal exceeds the maximum bandwidth supporting capability of the RedCap during the initial access phase. Therefore, the PUCCH of the RedCap cannot be accurately located on a side of a system bandwidth, and the system bandwidth will eventually be divided into multiple parts, thereby resulting in generation of resource fragmentation and reducing the resource usage efficiency.

The embodiments of the present disclosure provide a resource determining method, an apparatus, a device, a computer-readable storage medium and a computer program product. The PUCCH resource for the RedCap terminal is determined by position information of the initial BWP of the RedCap terminal and a starting PRB position for PUCCH transmission, thereby reducing the generation of PUSCH resource fragmentation, enhancing the network resource usage efficiency and an uplink peak data rate, and further, improving user service experience. The embodiments of the present disclosure further provide PUCCH resource determining methods for the RedCap terminal without frequency hopping respectively, specifically regarding to the different relative positions between the initial uplink BWPs of the RedCap terminal and the conventional terminal, so as to effectively solve the PUSCH resource fragmentation problem.

The embodiments of the present disclosure will be further described below with reference to the drawings.

FIG. 2 is a schematic diagram of a system architecture for performing a communication resource determining method provided by an embodiment of the present disclosure. As shown in FIG. 2, the system architecture includes a RedCap terminal 100 and a base station 200, and the RedCap terminal 100 and the base station 200 are communicatively connected to each other.

The base station 200 sends broadcast information to the RedCap terminal 100. The broadcast information at least includes frequency hopping indication information and PUCCH configuration information. The frequency hopping indication information is used to be indicative of disabling PUCCH frequency hopping for the RedCap terminal or disabling PUCCH frequency hopping for the RedCap terminal.

The RedCap terminal 100 receives the broadcast information sent from the base station 200 and acquires the frequency hopping indication information and the PUCCH configuration information from the broadcast information. The RedCap terminal 100 obtains a starting position of the PUCCH according to BWP information for the RedCap terminal 100 and the PUCCH configuration information. Then, the PUCCH resource for the RedCap terminal 100 is determined according to the starting position of the PUCCH.

In an exemplary implementation, the PUCCH configuration information includes SIB1 notification information. The RedCap terminal 100 determines a common PUCCH resource set according to a PUCCH resource configuration index notified by the SIB1 notification information.

In an exemplary implementation, the PUCCH configuration information includes DCI and CCE. The RedCap terminal 100 determines a PUCCH resource index in the determined common PUCCH resource set according to the DCI and the CCE. The PUCCH resource index is represented as $r_{PUCCH}$.

In an exemplary implementation, the BWP information for the RedCap terminal 100 includes: starting position information of the initial uplink BWP for the RedCap terminal 100, end position information of the initial uplink BWP for the RedCap terminal 100, or relative position information between the initial uplink BWP for the RedCap terminal 100 and the initial uplink BWP for the conventional terminal.

In an exemplary implementation, the starting position of the PUCCH is a starting PRB position for PUCCH transmission.

In an exemplary implementation, the RedCap terminal 100 obtaining the starting position of the PUCCH according to the BWP information for the RedCap terminal 100 and the PUCCH configuration information specifically includes: obtaining a PUCCH resource index according to the DCI and the CCE; and obtaining the starting position of the PUCCH according to the BWP information for the RedCap terminal 100 and the PUCCH resource Index.

In an exemplary implementation, the RedCap terminal 100 obtaining the starting position of the PUCCH according to the BWP information for the RedCap terminal 100 and the PUCCH configuration information specifically includes: obtaining an offset according to the PUCCH resource configuration information; and obtaining the starting position of the PUCCH according to the offset and the BWP information for the RedCap terminal 100. Further, a first offset and a second offset are obtained according to the PUCCH resource configuration information. The first offset is determined according to the common PUCCH resource set in the PUCCH resource configuration information, and the second offset is determined according to the control information (DCI) and the control channel element (CCE) in the PUCCH resource configuration information.

In an exemplary implementation, determining the PUCCH resource for the RedCap according to the starting position of the PUCCH specifically includes: configuring the PUCCH resource for the RedCap terminal in a target frequency band according to the starting position of the PUCCH.

In this embodiment, the PUCCH resource for the RedCap terminal is determined by position information of the initial BWP for the RedCap terminal and the starting PRB position for the PUCCH transmission, thereby reducing the generation of the PUSCH resource fragmentation, enhancing the network resource usage efficiency, and further, enhancing the user service experience.

Since relative positions between the initial uplink BWPs configured for the RedCap terminal and the initial uplink BWP for the conventional terminal are different, the PUCCH resource configurations for the RedCap terminal are different. The embodiments of the present disclosure will be further elaborated below by different relationships between the BWP for the RedCap terminal and the BWP for the conventional terminal.

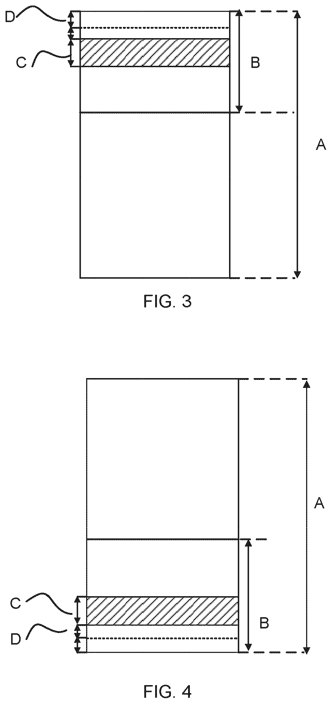

FIG. 3 is a schematic diagram of a resource determining method in a first situation provided by an embodiment of the present disclosure. As shown in FIG. 3, the initial uplink BWP for the RedCap terminal is included in the initial uplink BWP for the conventional terminal, and is located at an upper edge or a higher frequency part of the initial uplink BWP for the conventional terminal. For the convenience of explanation, the initial uplink BWP for the conventional terminal is represented as A in the drawing, the initial uplink BWP for the RedCap terminal is represented as B in the drawing, a PRB offset and a cyclic offset are a total offset represented as D in the drawing, and the target frequency band is represented as C in the drawing. This embodiment will be described below by taking the target frequency band occupying 1 as an example.

During the initial access phase of the RedCap terminal, when SIB information (e.g., SIB information 1 (SIB1)) in the PUCCH configuration information sent from the base station is indicative of disabling PUCCH frequency hopping for the RedCap terminal or disabling frequency hopping, the RedCap terminal first determines a common PUCCH resource set according to the PUCCH resource configuration index notified by SIB1; and then determines the PUCCH resource with an index of $r_{PUCCH}$ in the common

PUCCH resource set by combining DCI and CCE, where $0 \leq r_{PUCCH} \leq 15$. Specifically:

$$r_{PUCCH} = \left\lfloor \frac{2 \cdot n_{CCE,0}}{N_{CCE}} \right\rfloor + 2 \cdot \Delta_{PRI}$$

where $N_{CCE}$ is a number of CCEs included in a CORESET used by the RedCap terminal for PDCCH reception, $n_{CCE,0}$ is a starting CCE index of the PDCCH for scheduling DCI, and $\Delta_{PRI}$ is PUCCH resource indication field information in the DCI.

When the initial uplink BWP configured for the RedCap terminal is included in the initial uplink BWP for the conventional terminal, and is located at an upper edge or a higher frequency part of the initial uplink BWP for the conventional terminal, or a center frequency of the initial uplink BWP for the RedCap terminal is greater than a center frequency of the initial uplink BWP for the conventional terminal, the PUCCH resource for the RedCap terminal are fixedly configured at the upper edge of the initial uplink BWP with a certain offset. The starting PRB position of the PUCCH transmission for the RedCap ter-

minal is:

$$N_{\mathrm{BWP}}^{\mathrm{size}} - 1 - RB_{\mathrm{BWP}}^{\mathrm{offset}} - \left\lfloor (r_{\mathrm{PUCCH}} \bmod 8) / N_{CS} \right\rfloor,$$

or

$$N_{\mathrm{BWP}}^{\mathrm{size}} - 1 - RB_{\mathrm{BWP}}^{\mathrm{offset}} - \left\lfloor r_{\mathrm{PUCCH}} / N_{CS} \right\rfloor,$$

where PRB is used to describe a relative position of a resource block in an actual transmission, $r_{\mathrm{PUCCH}}$ represents a PUCCH resource index, $N_{\mathrm{BWP}}^{\mathrm{size}}$ represents a number of PRBs of the initial uplink BWP configured for the RedCap terminal, $RB_{\mathrm{BWP}}^{\mathrm{offset}}$ represents a predefined PRB offset, $N_{CS}$ represents a total number of indexes in an initial cycle offset index set, $\lfloor \rfloor$ represents rounding down, and mod represents modulo operation.

By the resource configuration method in this embodiment, in addition to the predefined PRB offset and the cyclic offset, the PUCCH resource for the RedCap terminal are always configured at an edge part of a bandwidth of the initial uplink BWP, thereby alleviating the PUSCH resource fragmentation problem.

FIG. 4 is a schematic diagram of a resource determining method in a second situation provided by an embodiment of the present disclosure. As shown in FIG. 4, the initial uplink BWP for the RedCap terminal is included in the initial uplink BWP for the conventional terminal, and is located at a lower edge or a lower frequency part of the initial uplink BWP for the conventional terminal. The initial uplink BWP for the conventional terminal is represented as A in the drawing, the initial uplink BWP for the RedCap terminal is represented as B in the drawing, a PRB offset and a cyclic offset are a total offset represented as D in the drawing, and the target frequency band is represented as C in the drawing. This embodiment will be described below by taking the target frequency band occupying 1 as an example.

During the initial access phase of the RedCap terminal, when broadcast SIB information is indicative of disabling PUCCH frequency hopping for the RedCap terminal or disabling frequency hopping, the RedCap terminal first determines a common PUCCH resource set according to the PUCCH resource configuration index notified by SIB1, and then determines the PUCCH resource with an index $r_{\mathrm{PUCCH}}$ in the common PUCCH resource set by combining DCI and CCE, where $0 \le r_{\mathrm{PUCCH}} \le 15$. Specifically as follows:

$$r_{\mathrm{PUCCH}} = \left\lfloor \frac{2 \cdot n_{\mathrm{CCE},0}}{N_{\mathrm{CCE}}} \right\rfloor + 2 \cdot \Delta_{\mathrm{PRI}}$$

where $N_{\mathrm{CCE}}$ is a number of CCEs included in a CORESET used by the RedCap terminal for PDCCH reception, $n_{\mathrm{CCE},0}$ is a starting CCE index of the PDCCH for scheduling DCI, and $\Delta_{\mathrm{PRI}}$ is PUCCH resource indication field information in DCI.

When the initial uplink BWP configured for the RedCap terminal is included in the initial uplink BWP for the conventional terminal and is located at a lower edge or a lower frequency part of the initial uplink BWP for the conventional terminal, or a center frequency of the initial uplink BWP for the RedCap terminal is smaller than a center frequency of the initial uplink BWP for the conventional terminal, the PUCCH resource for the RedCap terminal are fixedly configured at the lower edge of the initial uplink BWP with a certain offset. The starting PRB position of the PUCCH transmission for the RedCap terminal is:

$$RB_{\mathrm{BWP}}^{\mathrm{offset}} + \left\lfloor (r_{\mathrm{PUCCH}} \bmod 8) / N_{CS} \right\rfloor,$$

or

$$RB_{\mathrm{BWP}}^{\mathrm{offset}} + \left\lfloor r_{\mathrm{PUCCH}} / N_{CS} \right\rfloor,$$

where PRB is used to describe a relative position of a resource block in an actual transmission, $r_{\mathrm{PUCCH}}$ represents a PUCCH resource index, $RB_{\mathrm{BWP}}^{\mathrm{offset}}$ represents a predefined PRB offset, $N_{CS}$ represents a total number of indexes in an initial cycle offset index set, $\lfloor \rfloor$ represents rounding down, and mod represents modulo operation. In addition to the predefined PRB offset and the cyclic offset, the PUCCH resource for the RedCap terminal are always configured at an edge of the bandwidth of the initial uplink BWP, thereby greatly alleviating the PUSCH resource fragmentation problem.

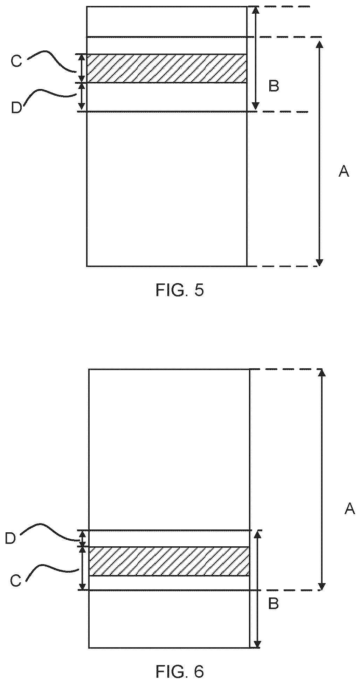

FIG. 5 is a schematic diagram of a resource determining method in a third situation provided by an embodiment of the present disclosure. As shown in FIG. 5, the initial uplink BWP for the RedCap terminal partially overlaps with the initial uplink BWP for the conventional terminal, and is located at an upper edge or a higher frequency part of the initial uplink BWP for the conventional terminal. The initial uplink BWP for the conventional terminal is represented as A in the drawing, the initial uplink BWP for the RedCap terminal is represented as B in the drawing, a total offset is represented as D in the drawing, and the target frequency band is represented as C in the drawing. This embodiment will be described below by taking the target frequency band occupying 1 as an example.

During the initial access phase, when broadcast SIB information is indicative of disabling PUCCH frequency hopping for the RedCap terminal or disabling frequency hopping, the RedCap terminal first determines a common PUCCH resource set according to the PUCCH resource configuration index notified by SIB1, and then determines the PUCCH resource with an index $r_{PUCCH}$ from the common PUCCH resource set by combining DCI with CCE, where $0 \leq r_{PUCCH} \leq 15$, specifically:

$$r_{PUCCH} = \left\lfloor \frac{2 \cdot n_{CCE,0}}{N_{CCE}} \right\rfloor + 2 \cdot \Delta_{PRI}$$

where $N_{CCE}$ is a number of CCEs included in a CORESET used by the RedCap terminal for PDCCH reception, $n_{CCE,0}$ is a starting CCE index of a PDCCH for scheduling DCI, and $\Delta_{PRI}$ is PUCCH resource indication field information in DCI.

When the initial uplink BWP configured for the RedCap terminal partially overlaps with the initial uplink BWP for the conventional terminal and is located at an upper edge or a higher frequency part of the initial uplink BWP for the conventional terminal, or a difference between the starting PRB position of the initial uplink BWP for the RedCap terminal and the end PRB position of the initial uplink BWP for the conventional terminal is less than a certain threshold, or the starting PRB position of the initial uplink BWP for the RedCap terminal is greater than or equal to the end PRB position of the initial uplink BWP for the conventional terminal, the PUCCH resource for the RedCap terminal are fixedly configured at the lower edge of the initial uplink BWP with a certain offset. The starting PRB position of the PUCCH transmission for the RedCap terminal is:

$$RB_{BWP}^{offset} + \left\lfloor \left( r_{PUCCH} \bmod 8 \right) / N_{CS} \right\rfloor,$$

or

$$RB_{BWP}^{offset} + \left\lfloor r_{PUCCH} / N_{CS} \right\rfloor,$$

where PRB is used to describe a relative position of a resource block in an actual transmission, $r_{PUCCH}$ represents the PUCCH resource index, $RB_{BWP}^{offset}$ represents a predefined PRB offset, $N_{CS}$ represents a total number of indexes in an initial cycle offset index set, $\lfloor \ \rfloor$ represents rounding down, and mod represents modulo operation. In addition to the predefined PRB offset and the cyclic offset, the PUCCH resource for the RedCap terminal are always configured at an edge part of the bandwidth of the initial uplink BWP, thereby greatly alleviating the PUSCH resource fragmentation problem.

FIG. 6 is a schematic diagram of a resource determining method in a fourth situation provided by an embodiment of the present disclosure. As shown in FIG. 6, the initial uplink BWP for the RedCap terminal partially overlaps with the initial uplink BWP for the conventional terminal, and is located at a lower edge or a lower frequency part of the initial uplink BWP for the conventional terminal. The initial uplink BWP for the conventional terminal is represented as A in in the drawing, the initial uplink BWP for the RedCap terminal is represented as B in the drawing, a total offset is represented as D in the drawing, and the target frequency band is represented as C in the drawing. This embodiment will be described below by taking the target frequency band occupying 1 as an example.

During the initial access phase, when broadcast SIB information is indicative of disabling PUCCH frequency hopping for the RedCap terminal or disabling frequency hopping, the RedCap terminal first determines a common PUCCH resource set according to the PUCCH resource configuration index notified by SIB1, and then determines the PUCCH resource with an index $r_{PUCCH}$ in the common PUCCH resource set by combining DCI with CCE, where $0 \leq r_{PUCCH} \leq 15$, specifically:

$$r_{PUCCH} = \left\lfloor \frac{2 \cdot n_{CCE,0}}{N_{CCE}} \right\rfloor + 2 \cdot \Delta_{PRI}$$

where $N_{CCE}$ is a number of CCEs included in a CORESET used by the RedCap terminal for PDCCH reception, $n_{CCE,0}$ is a starting CCE index of the PDCCH for scheduling DCI, and $\Delta_{PRI}$ is PUCCH resource indication field information in DCI.

When the initial uplink BWP configured for the RedCap terminal partially overlaps with the initial uplink BWP for the conventional terminal, and is located at a lower edge or a lower frequency part of the initial uplink BWP for the conventional terminal. For example, a difference between the end PRB position of the initial uplink BWP for the RedCap terminal and the starting PRB position of the initial uplink BWP for the conventional terminal is less than a certain threshold, or the starting PRB position of the initial uplink BWP for the conventional terminal is greater than or equal to the end PRB position of the initial uplink BWP for the RedCap terminal, the PUCCH resource for the RedCap terminal are fixedly configured at an upper edge of the initial uplink BWP with a certain offset. The starting PRB position of the PUCCH transmission for the RedCap terminal is:

$$N_{BWP}^{size} - 1 - RB_{BWP}^{offset} - \left\lfloor \left( r_{PUCCH} \bmod 8 \right) / N_{CS} \right\rfloor,$$

or

$$N_{BWP}^{size} - 1 - RB_{BWP}^{offset} - \left\lfloor r_{PUCCH} / N_{CS} \right\rfloor,$$

where PRB is used to describe a relative position of a resource block in an actual transmission, $r_{PUCCH}$ represents a PUCCH resource index, $N_{BWP}^{size}$ represents a number of PRBs of the initial uplink BWP configured for the RedCap terminal, $RB_{BWP}^{offset}$ represents a predefined PRB offset, $N_{CS}$ represents a total number of indexes in an initial cycle offset index set, $\lfloor\rfloor$ represents rounding down, and mod represents modulo operation. In addition to the predefined PRB offset and the cyclic offset, the PUCCH resource for the RedCap terminal are always configured at an edge part of the bandwidth of the initial uplink BWP, thereby greatly alleviating the PUSCH resource fragmentation problem.

The embodiments of the present disclosure provide a joint usage of methods that combine the first scenario to fourth scenario as follows.

When the initial uplink BWP for the RedCap terminal is located inside the initial uplink BWP for the conventional terminal (the two initial uplink BWPs completely overlap with each other), as described in the first scenario and second scenario, the methods corresponding to the first scenario and second scenario above are adopted.

When the initial uplink BWP for the RedCap terminal is located outside the initial uplink BWP for the conventional terminal (the two initial uplink BWPs do not overlap or partially overlap with each other), as described in the third scenario and fourth scenario, the methods corresponding to the third and fourth scenarios above are adopted.

An embodiment of the present disclosure further provides the following usage scenarios of the resource determining method.

During the initial access phase of the RedCap terminal, when broadcast SIB information is indicative of disabling PUCCH frequency hopping for the RedCap terminal or disabling frequency hopping, the RedCap terminal first determines a common PUCCH resource set according to the PUCCH resource configuration index notified by SIB1, and then determines the PUCCH resource with an index $r_{PUCCH}$ in the common PUCCH resource set by combining DCI and CCE, where $0 \leq r_{PUCCH} \leq 15$, specifically as.

When the initial uplink BWP configured for the RedCap terminal is included in the initial uplink BWP for the conventional terminal and is located at an upper edge or a higher frequency part of the initial uplink BWP for the conventional terminal, or a center frequency of the initial uplink BWP for the RedCap terminal is greater than a center frequency of the initial uplink BWP for the conventional terminal, or when the initial uplink BWP configured for the RedCap terminal partially overlaps with the initial uplink BWP for the conventional terminal and is located at a lower edge or a lower frequency part of the initial uplink BWP for the conventional terminal, or a difference between the end PRB position of the initial uplink BWP for the RedCap terminal and the starting PRB position of the initial uplink BWP for the conventional terminal is less than a certain threshold, the PUCCH resource index for the RedCap terminal is calculated as:

$$r_{PUCCH} = \left( \left\lfloor \frac{2 \cdot n_{CCE,0}}{N_{CCE}} \right\rfloor + 2 \cdot \Delta_{PRI} \right) \bmod 8 + 8,$$

where $N_{CCE}$ is a number of CCEs included in a CORESET used by the RedCap terminal for PDCCH reception, $n_{CCE,0}$ is a starting CCE index of PDCCH for scheduling DCI, and $\Delta_{PRI}$ is PUCCH resource indication field information in DCI, $\lfloor\rfloor$ represents rounding down, and mod represents modulo operation. The PUCCH resource for the RedCap terminal is determined based on values of the predefined PRB offset and $r_{PUCCH}$, and then the starting PRB position of the PUCCH resource for the RedCap terminal is taken as:

$$N_{BWP}^{size} - 1 - RB_{BWP}^{offset} - \left\lfloor \left( r_{PUCCH} \bmod 8 \right) / N_{CS} \right\rfloor,$$

or

$$N_{BWP}^{size} - 1 - RB_{BWP}^{offset} - \left\lfloor r_{PUCCH} / N_{CS} \right\rfloor,$$

where PRB is used to describe a relative position of a resource block in an actual transmission, $r_{PUCCH}$ represents a PUCCH resource index, $N_{BWP}^{size}$ represents a number of PRBs of the initial uplink BWP configured for the RedCap terminal, $RB_{BWP}^{offset}$ represents a predefined PRB offset, $N_{CS}$ represents a total number of indexes in an initial cycle offset index set, $\lfloor\rfloor$ represents rounding down, and mod represents modulo operation. In addition to the predefined PRB offset and the cyclic offset, the PUCCH resource for the RedCap terminal are always configured at an edge part of the bandwidth of the initial uplink BWP, thereby greatly alleviating the PUSCH resource fragmentation problem.

When the initial uplink BWP configured for the RedCap terminal is included in the initial uplink BWP for the conventional terminal and is located at a lower edge or a lower frequency part of the initial uplink BWP for the conventional terminal, or a center frequency of the initial uplink BWP for the RedCap terminal is smaller than a center frequency of the initial uplink BWP for the conventional terminal, or when the initial uplink BWP configured for the RedCap terminal partially overlaps with the initial uplink BWP for the conventional terminal and is located at an upper edge or a higher frequency part of the initial uplink BWP for the conventional terminal, or a difference between the starting PRB position of the initial uplink BWP for the RedCap terminal and the end PRB position of the initial uplink BWP for the conventional terminal is less than a certain threshold, the PUCCH resource index for the RedCap terminal is calculated as:

$$r_{\text{PUCCH}} = \left( \left\lfloor \frac{2 \cdot n_{\text{CCE},0}}{N_{\text{CCE}}} \right\rfloor + 2 \cdot \Delta_{\text{PRI}} \right) \bmod 8,$$

where $N_{\text{CCE}}$ is a number of CCEs included in a CORESET used by the RedCap terminal for PDCCH reception, $n_{\text{CCE},0}$ is a starting CCE index of PDCCH for scheduling DCI, and $\Delta_{\text{PRI}}$ is PUCCH resource indication field information in DCI, ⌊⌋ represents rounding down, and mod represents modulo operation. The PUCCH resource for the RedCap terminal is determined based on values of the predefined PRB offset and $r_{\text{PUCCH}}$, and then the starting PRB position of the PUCCH resource for the RedCap terminal is taken as:

$$RB_{\text{BWP}}^{\text{offset}} + \left\lfloor \left( r_{\text{PUCCH}} \bmod 8 \right)/N_{CS} \right\rfloor,$$

or

$$RB_{\text{BWP}}^{\text{offset}} + \left\lfloor r_{\text{PUCCH}} / N_{CS} \right\rfloor,$$

where PRB is used to describe a relative position of a resource block in an actual transmission, $r_{\text{PUCCH}}$ represents a PUCCH resource index, $RB_{\text{BWP}}^{\text{offset}}$ represents a predefined PRB offset, $N_{CS}$ represents a total number of indexes in an initial cycle offset index set, ⌊⌋ represents rounding down, and mod represents modulo operation. In addition to the predefined PRB offset and the cyclic offset, the PUCCH resources for the RedCap terminal are always configured at an edge part of the bandwidth of the initial uplink BWP, thereby greatly alleviating the PUSCH resource fragmentation problem.

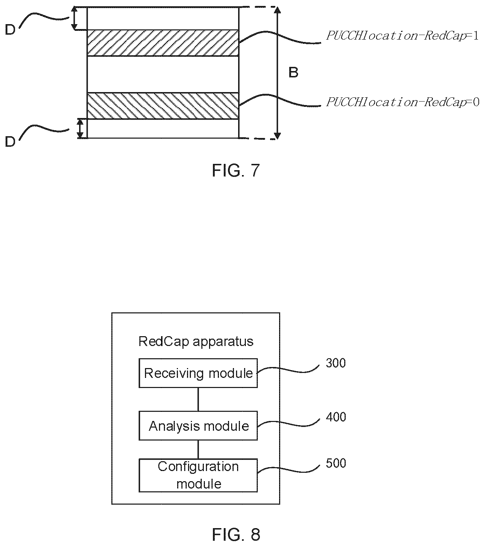

FIG. 7 is a schematic diagram of a resource determining method in another situation provided by an embodiment of the present disclosure. As shown in FIG. 7, during the initial access phase of the RedCap terminal, when broadcast SIB information is indicative of disabling PUCCH frequency hopping for the RedCap terminal or disabling frequency hopping, the RedCap terminal first determines a common PUCCH resource set according to the PUCCH resource configuration index notified by SIB1 and then determines the PUCCH resource with an index $r_{\text{PUCCH}}$ in the common PUCCH resource set by combining DCI and CCE, where $0 \le r_{\text{PUCCH}} \le 15$, specifically as follows:

$$r_{\text{PUCCH}} = \left\lfloor \frac{2 \cdot n_{\text{CCE},0}}{N_{\text{CCE}}} \right\rfloor + 2 \cdot \Delta_{\text{PRI}}$$

where $N_{\text{CCE}}$ is a number of CCEs included in a CORESET used by the RedCap terminal for PDCCH reception, $n_{\text{CCE},0}$ is a starting CCE index of PDCCH for scheduling

DCI, and $\Delta_{\text{PRI}}$ is PUCCH resource indication field information in DCI.

According to the relative position of the initial uplink BWP configured for the RedCap terminal and network resource configuration, the base station may automatically configure the PUCCH resource for the RedCap terminal at the upper edge or the lower edge of the initial uplink BWP according to a current situation through signaling indication.

For example, the base station newly defines a 1-bit information element parameter *PUCCHlocation-RedCap* in the SIB, so as to indicate the position of the PUCCH resource for the RedCap terminal. Assume that the 1-bit indicates that the starting PRB corresponding to the PUCCH resource is $N_{\text{BWP}}^{\text{size}} - 1 - RB_{\text{BWP}}^{\text{offset}}$ or $RB_{\text{BWP}}^{\text{offset}}$, or the 1-bit indicates that the PUCCH resource are fixedly configured at the upper edge or the lower edge of the initial uplink BWP with a certain offset, or the 1-bit indicates a reference point of an offset corresponding to the PUCCH resource.

Specifically, when PUCCHlocation-RedCap=1, the PUCCH resource for the RedCap terminal is fixedly configured at the upper edge of the initial uplink BWP with a certain offset, where the starting PRB position of the PUCCH resource for the RedCap terminal is:

$$N_{\text{BWP}}^{\text{size}} - 1 - RB_{\text{BWP}}^{\text{offset}} - \left\lfloor \left( r_{\text{PUCCH}} \bmod 8 \right)/N_{CS} \right\rfloor,$$

or

$$N_{\text{BWP}}^{\text{size}} - 1 - RB_{\text{BWP}}^{\text{offset}} - \left\lfloor r_{\text{PUCCH}} / N_{CS} \right\rfloor,$$

where PRB is used to describe a relative position of a resource block in an actual transmission, $r_{\text{PUCCH}}$ represents a PUCCH resource index, $N_{\text{BWP}}^{\text{size}}$ represents a number of PRBs of the initial uplink BWP configured for the RedCap terminal, $RB_{\text{BWP}}^{\text{offset}}$ represents a predefined PRB offset, $N_{CS}$ represents a total number of indexes in an initial cycle offset index set, ⌊⌋ represents rounding down, and mod represents modulo operation.

When *PUCCHlocation-RedCap*=0, the PUCCH resource for the RedCap terminal is fixedly configured at the lower edge of the initial uplink BWP with a certain offset, where the starting PRB position of the PUCCH resource for the RedCap terminal is:

$$RB_{\text{BWP}}^{\text{offset}} + \left\lfloor \left( r_{\text{PUCCH}} \bmod 8 \right)/N_{CS} \right\rfloor,$$

or

$$RB_{\text{BWP}}^{\text{offset}} + \lfloor r_{\text{PUCCH}} / N_{CS} \rfloor,$$

where PRB is used to describe a relative position of a resource block in an actual transmission, $r_{\text{PUCCH}}$ represents a PUCCH resource index, $RB_{\text{BWP}}^{\text{offset}}$ represents a predefined PRB offset, $N_{CS}$ represents a total number of indexes in an initial cycle offset index set, $\lfloor \rfloor$ represents rounding down, and mod represents modulo operation. In addition to the predefined PRB offset and the cyclic offset, the PUCCH resource for the RedCap terminal are always configured at an edge part of the bandwidth of the initial uplink BWP, thereby greatly alleviating the PUSCH resource fragmentation problem.

FIG. 8 is a schematic structural diagram of a RedCap apparatus provided by an embodiment of the present disclosure. As shown in FIG. 8, the RedCap apparatus provided by the embodiments of the present disclosure may perform the resource determining method provided by the embodiments of the present disclosure, and has corresponding functional modules and technical effects for performing the method. The apparatus may be implemented by software, hardware, or a combination of software and hardware, and includes: a receiving module 300, an analysis module 400, and a configuration module 500.

The receiving module 300 is configured to receive frequency hopping indication information and physical uplink control channel (PUCCH) configuration information. The frequency hopping indication information is used to be indicative of disabling PUCCH frequency hopping for a first terminal.

The analysis module 400 is configured to obtain a starting position of a PUCCH according to bandwidth part (BWP) information for the first terminal and the PUCCH configuration information.

The configuration module 500 is configured to determine a PUCCH resource for the first terminal according to the starting position of the PUCCH.

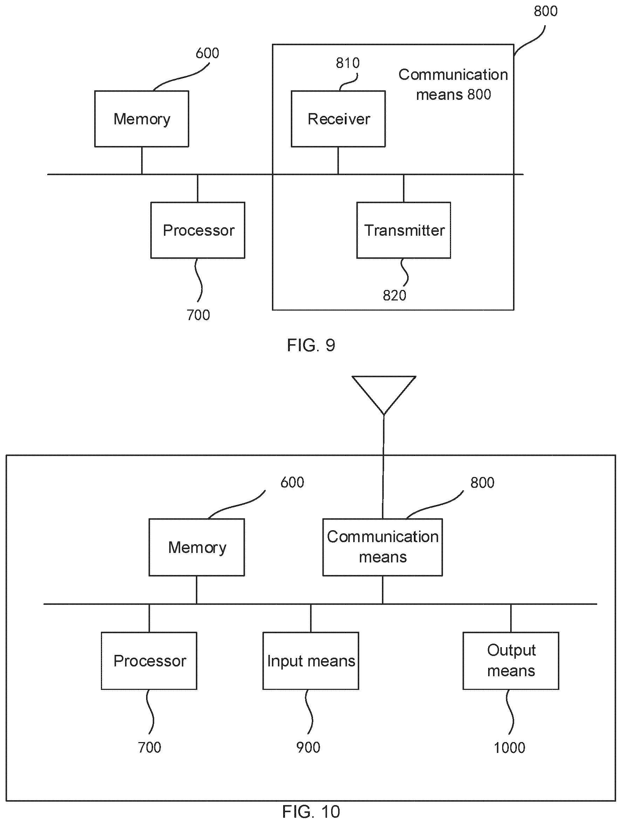

FIG. 9 is a schematic structural diagram of an electronic device provided by an embodiment of the present disclosure. As shown in FIG. 9, the device includes a processor 600, a memory 700, and a communication means 800. A number of the memory 700 and the processor 700 may be one or more. In FIG. 9, one memory 600 and one processor 700 are taken as an example. The memory 600 and the processor 700 in the device may be connected to each other through a bus or other means. In FIG. 10, connection via a bus is taken as an example.

The memory 600, as a computer-readable storage medium, may be used to store software programs, computer executable programs and modules, such as program instructions or modules corresponding to the resource determining method provided by any embodiment of the present disclosure. The processor 700 implements the resource determining method by executing the software programs, instructions and modules stored on the memory 1110.

The memory 600 may mainly include an area for storing programs and an area for storing data, the area for storing programs may store an operating system, and an application program required by at least one function unit. In addition, the memory 600 may include a high-speed random access memory, and may also include a non-volatile memory, such as at least one magnetic disk storage device, flash memory device, or other non-volatile solid state storage devices. In some examples, the memory 600 may further include memories located remotely with respect to the processor 700, and these remote memories may be connected to the device via a network. Examples of the network include, but are not limited to, Internet, corporate intranets, local area networks, mobile communication networks, and combinations thereof.

The communication means 800 is configured to perform transceiving communication under a control of the processor 700.

In an embodiment, the communication means 800 may include a receiver 810 and a transmitter 820. The receiver 810 is a module or a device combination in an electronic device that receives data. The transmitter 820 is a module or a device combination in an electronic device that transmits data.

As shown in FIG. 10, in an embodiment, the electronic device may further include an input means 900 and an output means 1000.

The input apparatus 900 may be used to receive input digital or character information and generate key signal inputs related to user settings and function controls of the device. The output apparatus 1000 may include a display device such as a display screen.

An embodiment of the present disclosure further provides a computer-readable storage medium that stores computer-executable instructions. The computer-executable instructions are used to perform the resource determining method provided by any embodiment of the present disclosure.

An embodiment of the present disclosure further provides a computer program product including a computer program or computer instructions. The computer program or computer instructions are stored in a computer-readable storage medium. A processor of a computer device reads the computer program or computer instructions from the computer-readable storage medium, and the computer program or computer instructions are executed by the processor, so as to enable the computer device to execute the resource determining method provided by any embodiment of the present disclosure.

The system architecture and application scenarios described in the embodiments of the present disclosure are for the purpose of explaining the technical solutions of the embodiments of present disclosure more clearly, and do not constitute a limitation on the technical solutions provided by the embodiments of present disclosure. Those skilled in the art will know that with the evolution of the system architecture and the emergence of new application scenarios, the technical solutions provided by the embodiments of the present disclosure are also applicable to similar technical problems.

It will be understood by those skilled in the art that all or some of the steps in the method, the system, and the functional modules or units in the device disclosed above may be implemented as software, firmware, hardware, and suitable combinations thereof.

In hardware implementations, the division between functional modules/units mentioned in the above description does not necessarily correspond to the division of physical components; for example, one physical component may have multiple functions, or one function or step may be performed by collaboration of several physical components. Some or all of the physical components may be implemented as software executed by a processor, such as a central processing unit, a digital signal processor or a microprocessor, or be implemented as hardware, or be implemented as an integrated circuit, such as an application specific integrated circuit. Such software may be distributed in a computer-readable medium, which may include a computer storage medium (or a non-transitory medium) and a communication medium (or a transitory medium). As well known to those skilled in the art, the term "computer storage medium" includes volatile and non-volatile, removable and non-removable medium implemented in any method or technology for storing information (e.g., computer-readable instructions, data structures, program modules or other data). Computer storage medium includes, but is not limited to, RAM, ROM, EEPROM, flash memory or other memory technology, CD-ROM, Digital Versatile Disk (DVD) or other optical disk storage, magnetic cassettes, magnetic tapes, disk storage or other magnetic storage devices, or any other medium used to store the desired information and that can be accessed by a computer. In addition, it is well known to those skilled in the art that a communication medium typically includes computer-readable instructions, data structures, program modules or other data in a modulated data signal such as a carrier wave or other transmission mechanisms, and the communication medium may include any information delivery medium.

The terms "component", "module", "system", etc. used in this specification are used to refer to computer-related entities, hardware, firmware, a combination of hardware and software, software, or software in execution. For example, a component may be, but is not limited to, a process, processor, object, executable file, thread of execution, program or computer running on a processor. Through the illustrations, both applications running on the computing device and the computing device may be components. One or more components can reside in a process or thread of execution, and the component can be localized on one computer or distributed between 2 or more computers. In addition, these components can execute from various computer-readable medium having various data structures stored thereon. A component may, for example, be based on a signal having one or more data packets (e.g., data from two components interacting with another component among a local system, a distributed system, or a network, e.g., the Internet that interacts with other systems via signals) for communicating through local or remote processes.

Some embodiments of the present disclosure have been described above with reference to the accompanying drawings, but not limit the scope of the present disclosure. Any modifications, equivalent substitutions and improvements made by those skilled in the art without departing from the scope and essence of the present disclosure shall be within the scope of the present disclosure.

## Claims

1. A resource determining method, comprising:

   receiving, by a first terminal, frequency hopping indication information and physical uplink control channel, PUCCH, configuration information, wherein the frequency hopping indication information is used to be indicative of disabling PUCCH frequency hopping for the first terminal; obtaining a starting position of a PUCCH according to bandwidth part, BWP, information for the first terminal and the PUCCH configuration information; and determining a PUCCH resource for the first terminal according to the starting position of the PUCCH.

2. The method according to claim 1, wherein the BWP information for the first terminal comprises at least one of:

   starting position information of an initial uplink BWP for the first terminal; and end position information of the initial uplink BWP for the first terminal.

3. The method according to claim 1, wherein the starting position of the PUCCH is a starting physical resource block, PRB, position of PUCCH transmission.

4. The method according to claim 1, wherein the obtaining the starting position of the PUCCH according to the BWP information for the first terminal and the PUCCH configuration information, comprises:

   obtaining a PUCCH resource index according to downlink control information, DCI, and a control channel element, CCE, in the PUCCH configuration information; and
obtaining the starting position of the PUCCH according to the BWP information for the first terminal and the PUCCH resource index.

5. The method according to claim 1, wherein the obtaining the starting position of the PUCCH according to the BWP information for the first terminal and the PUCCH configuration information, comprises:

obtaining an offset according to the PUCCH resource configuration information, and
obtaining the starting position of the PUCCH according to the offset and the BWP information for the first terminal.

6. The method according to claim 5, wherein the obtaining the offset according to the PUCCH resource configuration information, comprises:

obtaining a first offset and a second offset according to the PUCCH resource configuration information;
wherein the first offset is determined according to a common PUCCH resource set in the PUCCH resource configuration information; and the second offset is determined according to control information, DCI, and a control channel element, CCE, in the PUCCH resource configuration information.

7. The method according to claim 1, wherein the determining the PUCCH resource for the first terminal according to the starting position of the PUCCH, comprises: configuring the PUCCH resource for the first terminal in a target frequency band according to the starting position of the PUCCH.

8. The method according to claim 1, wherein the first terminal is a reduced capability, RedCap, terminal.

9. A resource determining method, comprising:

sending frequency hopping indication information and physical uplink control channel, PUCCH, configuration information, wherein the frequency hopping indication information is used to be indicative of disabling PUCCH frequency hopping for a first terminal;
receiving bandwidth part, BWP, information for the first terminal and bandwidth part, BWP, information for a second terminal;
obtaining signaling indication according to the bandwidth part, BWP, information for the first terminal, the bandwidth part, BWP, information for the second terminal and a network configuration resource;
determining a starting position of a PUCCH according to the signaling indication; and
determining a PUCCH resource for the first terminal according to the starting position of the PUCCH.

10. The method according to claim 9, wherein the BWP information for the first terminal comprises: position information of an initial uplink BWP for the first terminal.

11. The method according to claim 9, wherein the BWP information for the second terminal comprises: position information of an initial uplink BWP for the second terminal.

12. The method according to claim 9, wherein the starting position of the PUCCH is a starting physical resource block, PRB, position of PUCCH transmission.

13. The method according to claim 9, wherein the signaling indication is predefined by a system information block, SIB, or downlink control information, DCI.

14. The method according to claim 9, wherein the determining the PUCCH resource for the first terminal according to the starting position of the PUCCH, comprises:
configuring the PUCCH resource for the first terminal in a target frequency band according to the starting position of the PUCCH.

15. A reduced capability, RedCap, apparatus, comprising:

a receiving module, configured to receive frequency hopping indication information and physical uplink control channel, PUCCH, configuration information, wherein the frequency hopping indication information is used to be indicative of disabling PUCCH frequency hopping for a first terminal;
an analysis module, configured to obtain a starting position of a PUCCH according to bandwidth part, BWP, information for the first terminal and the PUCCH configuration information; and
a configuration module, configured to determine a PUCCH resource for the first terminal according to the starting position of the PUCCH.

16. An electronic device, comprising:

a memory, a processor and a computer program stored on the memory and executable on the processor;
wherein the processor, upon executing the computer program, implements the resource determining method according to any one of claims 1 to 14.

**17.** A computer-readable storage medium storing computer executable instructions, wherein the computer executable instructions are configured to execute the resource determining method according to any one of claims 1 to 14.

**18.** A computer program product, comprising a computer program or computer instructions stored on a computer-readable storage medium, wherein a processor of a computer device reads the computer program or the computer instructions from the computer-readable storage medium, the computer program or the computer instructions are executed by the processor, so as to enable the computer device to execute the PUCCH resource determining method according to any one of claims 1 to 14.

Initial uplink BWP for a conventional terminal

First hopping

Second hopping

First hopping

Second hopping

Index[0-7]

Index[8-15]

FIG. 1

200

100

FIG. 2

FIG. 3

FIG. 4

EP 4 429 314 A1

FIG. 5

FIG. 6

16

D

$PUCCHlocation-RedCap=1$

B

$PUCCHlocation-RedCap=0$

D

FIG. 7

RedCap apparatus

| Receiving module | 300 |

| Analysis module | 400 |

| Configuration module | 500 |

FIG. 8

FIG. 9

FIG. 10

## INTERNATIONAL SEARCH REPORT

| International application No. |
| --- |
| **PCT/CN2022/111793** |

**A.    CLASSIFICATION OF SUBJECT MATTER**

H04W 24/04(2009.01)i

According to International Patent Classification (IPC) or to both national classification and IPC

**B.    FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IEEE: 跳频, 指示, 取消, 不使能, 不激活, 带宽部分, 物理上行链路控制信道, 配置, 低能力终端, frequency, hop+, disable, positive, deactive, PRB, CCE, PUCCH, BWP, index, REDCAP

**C.    DOCUMENTS CONSIDERED TO BE RELEVANT**

| Category* | Citation of document, with indication, where appropriate, of the relevant passages | Relevant to claim No. |
| --- | --- | --- |
| X | ERICSSON. "Reduced maximum UE bandwidth for RedCap" *3GPP TSG-RAN WG1 Meeting #104-bis-e Tdoc R1-2102722*, 20 April 2021 (2021-04-20), sections 2-4 | 1-18 |
| X | INTERDIGITAL, INC. "Reduced maximum bandwidth for RedCap UEs" *3GPP TSG RAN WG1 #106-e R1-2107809*, 27 August 2021 (2021-08-27), sections 1-3 | 1-18 |
| A | HUAWEI et al. "Reduced maximum UE bandwidth" *3GPP TSG RAN WG1 Meeting #106-e, R1-2106459*, 27 August 2021 (2021-08-27), entire document | 1-18 |
| A | QUALCOMM INC. "BW Reduction for RedCap UE" *3GPP TSG-RAN WG1 Meeting #106bis-e R1-2110193*, 19 October 2021 (2021-10-19), entire document | 1-18 |
| A | CN 113039854 A (BEIJING XIAOMI MOBILE SOFTWARE CO., LTD.) 25 June 2021 (2021-06-25) entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 October 2022** | **26 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/111793**

| Patent document cited in search report | Publication date (day/month/year) | Patent family member(s) | Publication date (day/month/year) |
|---|---|---|---|
| CN 113039854 A | 25 June 2021 | None | |

Form PCT/ISA/210 (patent family annex) (January 2015)

**REFERENCES CITED IN THE DESCRIPTION**

**Patent documents cited in the description**

- CN 202111309111